# EUROPEAN PATENT APPLICATION

(11) **EP 4 629 409 A1**
(43) Date of publication of application: **08.10.2025**
(21) Application number: 24205100.1
(22) Date of filing: 07.10.2024
(51) Int. Cl.: H01M 50/147, H01M 50/172, H01M 50/536, H01M 50/543

(54) **SECONDARY BATTERY**

(30) Priority: 04.04.2024 KR 20240045640
(71) Applicant: SAMSUNG SDI CO., LTD., Yongin-si, Gyeonggi-do 17084 (KR)
(72) Inventor: ROH, Heyoung Cheoul, 17084 Yongin-si (KR); YONG, Jun Sun, 17084 Yongin-si (KR); BAE, Kwang Soo, 17084 Yongin-si (KR); LEE, Jun Hyung, 17084 Yongin-si (KR); KIM, Jung Soo, 17084 Yongin-si (KR); KIM, Ji Hwan, 17084 Yongin-si (KR)
(74) Representative: Marks & Clerk LLP

(57) **Abstract**

A secondary battery is provided in which a sufficient amount of pressing force is formed during welding between a terminal and a current collecting plate, thereby improving weldability and ensuring strong bonding force. The secondary battery includes an electrode assembly including an electrode tab, a current collecting unit electrically coupled to the electrode tab, a case accommodating the electrode assembly and the current collecting unit, a cap plate sealing the case, and a terminal mechanically and electrically coupled to the current collecting unit and located outside the cap plate. The current collecting unit includes an electrode current collecting plate welded to the electrode tab and a terminal current collecting plate protruding from the electrode current collecting plate toward the terminal and including a protruding portion welded to the terminal. The protruding portion includes an outer surface in contact with and welded to the terminal, the outer surface including a curved surface.

## Description

### BACKGROUND

### 1. Field

Embodiments of the present disclosure relate to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure provides a secondary battery in which regions to be welded of a terminal and a current collecting unit are formed as a curved surface, thereby increasing the size of welded regions in a given welding area. Thus, coupling force is improved compared to a structure in which regions to be welded are formed as a flat surface.

These and other aspects and features of the present disclosure will be described in or will be apparent from the following description of embodiments of the present disclosure.

A secondary battery according to an embodiment of the present disclosure includes an electrode assembly including an electrode tab, a current collecting unit electrically coupled to the electrode tab, a case accommodating the electrode assembly and the current collecting unit, a cap plate sealing the case, and a terminal mechanically and electrically coupled to the current collecting unit, the terminal being located outside the cap plate, wherein the current collecting unit includes an electrode current collecting plate welded to the electrode tab and a terminal current collecting plate protruding from the electrode current collecting plate toward the terminal and including a protruding portion welded to the terminal, and the protruding portion includes an outer surface in contact with and welded to the terminal, the outer surface including a curved surface.

The curved surface of the outer surface of the protruding portion is convex.

The terminal may include an inner surface in contact with and welded to the outer surface of the protruding portion, the inner surface including a curved surface formed in a shape corresponding to a shape of the outer surface of the protruding portion.

The electrode current collecting plate may include a central portion including an outer surface welded to the inner side of the terminal current collecting plate and peripheral portions extending in opposite directions from the central portion and welded to the electrode tab of the electrode assembly.

The central portion of the electrode current collecting plate may protrude in the outward direction with respect to the peripheral portions.

The electrode current collecting plate may further include connection portions formed between the central portion and the peripheral portions, the connection portions being slanted from the central portion toward the peripheral portions.

The terminal current collecting plate may further include a main body portion formed in a plate shape and including an inner surface in contact with and welded to the electrode current collecting plate, and the protruding portion may protrude from the outer surface of the main body portion in the outward direction.

The protruding portion may be formed in a cylindrical shape and may be coupled to or form part of the main body portion.

The protruding portion may further include a protrusion portion formed on a central region of the outer surface of the protruding portion and configured to pass through the terminal so as to be exposed to outside of the secondary battery.

The terminal may include: a flat terminal plate; and a welding area, wherein the welding area is thinner than the flat terminal plate, and wherein the welding area includes a concave terminal recess formed at the center of the inner surface of the terminal plate (i.e. on the outer or external surface of the terminal plate which faces the protruding portion).

The terminal recess may be located at a position corresponding to the protruding portion of the terminal current collecting plate.

A through-hole may be formed in the welding area, the through-hole positioned so as to correspond to the position of the protrusion portion.

The through-hole may have an inner diameter greater than or equal to the outer diameter of the protrusion portion.

A welding bead may be formed between the terminal and the terminal current collecting plate. The welding bead may be spaced from the through-hole in the terminal and may be formed in a circular ring shape.

The secondary battery may further include an insulating member interposed and/or positioned between the terminal and the cap plate.

The insulating member may be interposed and/or positioned between the terminal and the current collecting unit.

An insulating hole may be formed in the insulating member, and the inner surface of the welding area may be exposed to the current collecting unit through the insulating hole.

The protruding portion may extend through the insulating hole to be in contact with and welded to the inner surface of the welding area.

The insulating hole may have an inner diameter greater than or equal to the outer diameter of the protruding portion.

The current collecting unit and the terminal may be welded so as to provide sealing therebetween.

At least some of the above and other features of the invention are set out in the claims.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a secondary battery according to the present disclosure;
FIG. 2 is a cross-sectional view taken along line 2-2' in the secondary battery shown in FIG. 1;
FIG. 3 is a partial cross-sectional view showing portion 3 in FIG. 2 in an enlarged manner;
FIG. 4 is a cross-sectional view showing portion 4 in FIG. 3 in an enlarged manner;
FIG. 5 is an exploded perspective view showing a state before a terminal and a current collecting unit of the secondary battery shown in FIG. 2 are coupled to each other; and
FIG. 6 is a cross-sectional view taken along line 6-6' in FIG. 5.

### DETAILED DESCRIPTION OF THE DRAWINGS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

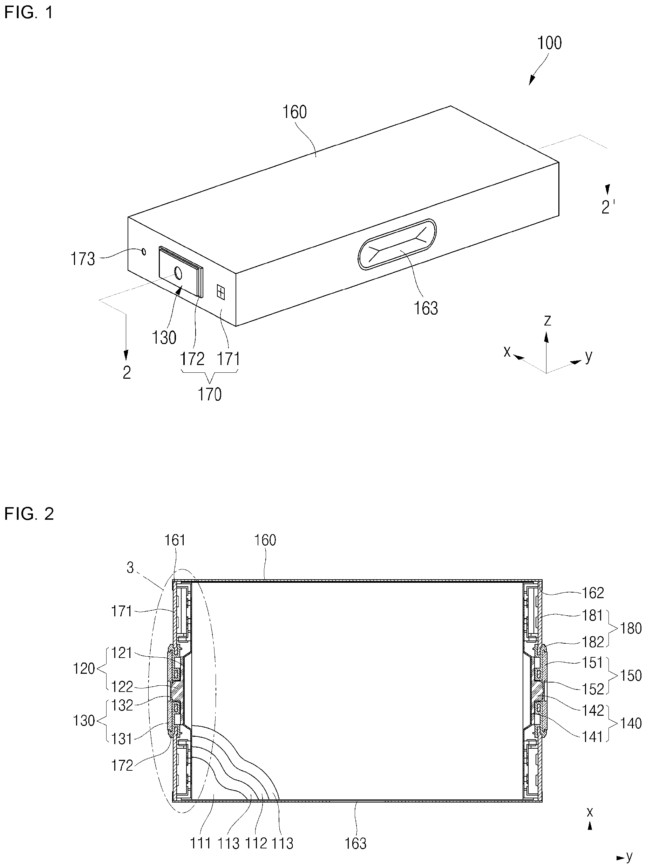

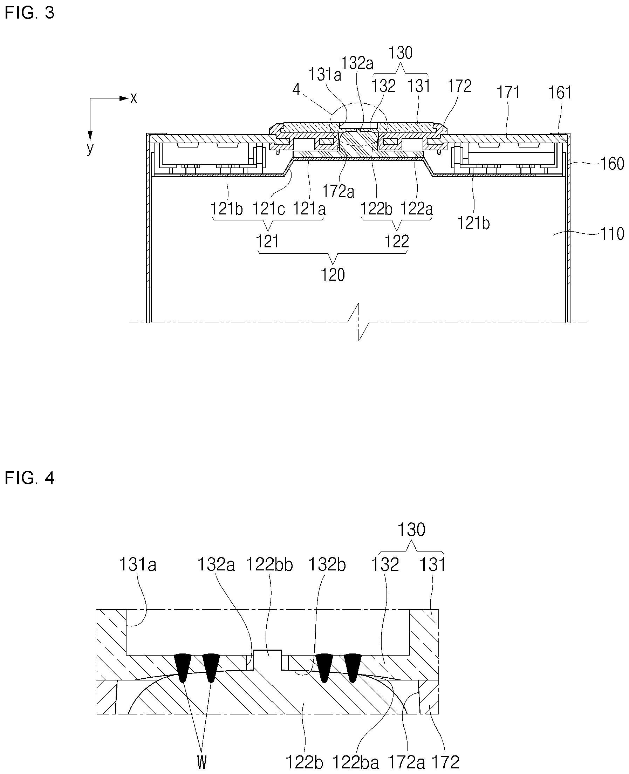

FIG. 1 is a perspective view showing a secondary battery 100 according to the present disclosure. FIG. 2 is a cross-sectional view taken along line 2-2' in the secondary battery 100 shown in FIG. 1. FIG. 3 is a partial cross-sectional view showing portion 3 in FIG. 2 in an enlarged manner. FIG. 4 is a cross-sectional view showing portion 4 in FIG. 3 in an enlarged manner.

As shown in FIGs. 1 to 4, secondary battery 100 may include an electrode assembly 110, a first current collecting unit 120, a first terminal 130, a case 160, and a first cap assembly 170. In some examples, the secondary battery 100 may further include a second current collecting unit 140, a second terminal 150, and a second cap assembly 180.

The electrode assembly 110 may be formed by winding or stacking a first electrode plate 111, a separator 113, and a second electrode plate 112. The first and second electrode plates 111 and 112 and the separator 113 may be formed in the shape of a thin plate or a thin film. If the electrode assembly 110 is formed by winding the stack, the winding axis may be parallel to the longitudinal direction y of the case 160. In other embodiments, the electrode assembly 110 may be of a stacked type rather than a wound type. The disclosure is not limited to any specific shape of the electrode assembly 110. For example, in other embodiments, the electrode assembly 110 may be a Z stack electrode assembly in which the separator is bent in a Z-shape and a positive electrode plate and a negative electrode plate are inserted into both sides of the separator. In some embodiments, one or more electrode assemblies 110 may be accommodated, e.g. stacked, in the case 160 such that long side surfaces of the electrode assemblies 110 are adjacent to each other. The disclosure is not limited as to the number of electrode assemblies 110.

The first electrode plate 111 of the electrode assembly 110 may serve as a positive electrode, and the second electrode plate 112 of the electrode assembly 110 may serve as a negative electrode. In other embodiments, the reverse may also be possible.

The first electrode plate 111 may be formed by coating a first electrode active material, such as a transition metal oxide, on a first electrode current collector, which is formed as a metal foil made of aluminum or an aluminum alloy. The first electrode plate 111 may include a first electrode tab (or first uncoated portion), which is an area not coated with the first electrode active material. The first electrode tab may serve as a passage for flow of current between the first electrode plate 111 and the first current collecting unit 120. In some examples, the first electrode tab may be formed by cutting so as to protrude in one direction when manufacturing the first electrode plate 111 or the first electrode tab may be formed so as to protrude farther in one direction than the separator 113 without a separate cutting process.

The second electrode plate 112 may be formed by coating a second electrode active material, such as graphite or carbon, on a second electrode current collector, which is formed as a metal foil made of copper, a copper alloy, nickel, or a nickel alloy, and may include a second electrode tab (or second uncoated portion), which is an area not coated with the second electrode active material. The second electrode tab may serve as a passage for flow of current between the second electrode plate 112 and the second current collecting unit 140. In some examples, the second electrode tab may be formed by cutting so as to protrude in one direction when manufacturing the second electrode plate 112 or may be formed so as to protrude farther in one direction than the separator 113 without a separate cutting process.

The first electrode tab may be located on the side surface of the left end (or one side end) of the electrode assembly 110, and the second electrode tab may be located on the side surface of the right end (or the other side end) of the electrode assembly 110. the left side and the right side may be defined on the basis of the secondary battery 100 shown in FIGs. 1 and 2 for convenience of description, and the positions thereof may be changed if the secondary battery 100 is rotated left and right or up and down. Hereinafter, respective components will be described on the basis of the secondary battery 100 as shown in FIGs. 1 to 3.

In some examples, the separator 113 may be located between the first electrode plate 111 and the second electrode plate 112 to prevent a short circuit therebetween while allowing lithium ions to move therebetween. The separator 113 may include, for example, polyethylene, polypropylene, or a composite film of polyethylene and polypropylene. In some examples, the separator 113 may be replaced with an inorganic solid electrolyte, such as a sulfide-based, oxide-based, or phosphate compound-based electrolyte that does not require a liquid or gel electrolyte.

The first electrode tab of the first electrode plate 111 and the second electrode tab of the second electrode plate 112 may be located on opposite end portions of the electrode assembly 110 described above. In some examples, the electrode assembly 110 may be accommodated in the case 160 together with an electrolyte. The electrolyte may include a lithium salt, such as LiPF6 or LiBF4, in an organic solvent, such as ethylene carbonate (EC), propylene carbonate (PC), diethyl carbonate (DEC), ethyl methyl carbonate (EMC), or dimethyl carbonate (DMC). The electrolyte may be in a liquid or gel form. In some examples, if an inorganic solid electrolyte is used, the electrolyte may be omitted.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

In some examples, the first current collecting unit 120 and the second current collecting unit 140 may be respectively coupled to the first electrode tab of the first electrode plate 111 and the second electrode tab of the second electrode plate 112, which are exposed from two opposite sides of the electrode assembly 110.

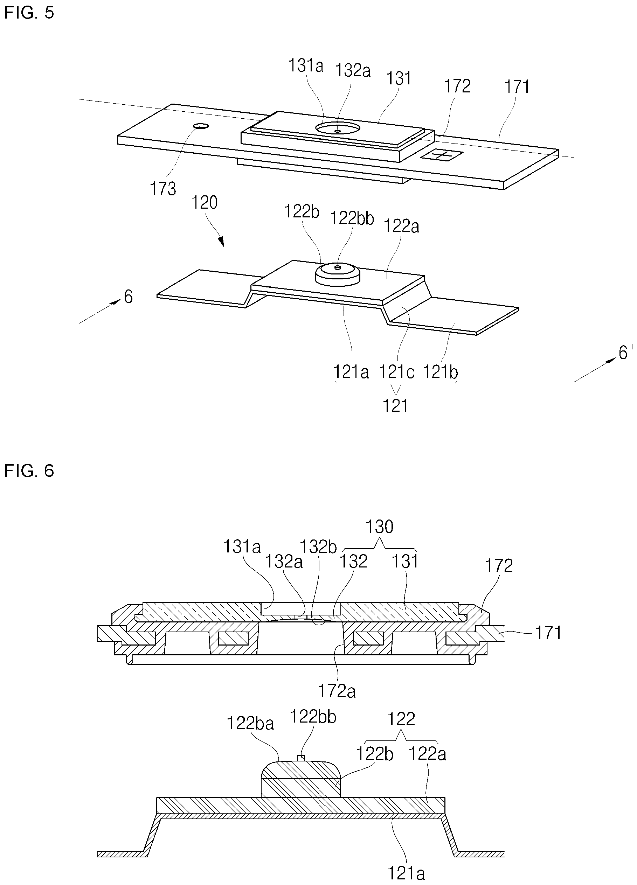

The first current collecting unit 120 may be made of metal and may electrically connect the first electrode plate 111 and the first terminal 130 to each other. FIGs. 5 and 6 are, respectively, an exploded perspective view and a cross-sectional view showing a state before the first terminal 130 and the first current collecting unit 120 are coupled to each other. As shown in FIGs. 5 and 6, after being coupled to a first cap plate 171 via a first insulating member 172, the first terminal 130 may be welded to the first current collecting unit 120. Hereinafter, the relationship between the first current collecting unit 120, the first terminal 130, and the first insulating member 172 will be described with reference to FIGs. 5 and 6.

The first current collecting unit 120 may be accommodated in the case 160 and may be interposed between the first cap plate 171 and the electrode assembly 110. The first current collecting unit 120 may include a first electrode current collecting plate 121, which is in contact with and coupled to the first electrode tab (e.g., uncoated portion) of the first electrode plate 111. The first current collecting unit 120 may also include a first terminal current collecting plate 122, which is in contact with and coupled to the first terminal 130. The first current collecting unit 120 may be made of aluminum or an aluminum alloy.

The first electrode current collecting plate 121 may extend in a first direction x, which is the longitudinal direction of the first cap plate 171, and may have a substantially plate shape. The first electrode current collecting plate 121 may be welded (e.g., laser-welded) to the first electrode tab exposed from one end portion of the electrode assembly 110 in a state where the first electrode current collecting plate 121 and the end portion of the electrode assembly 110 contact each other. Thus, the first electrode current collecting plate 121 may have the same polarity as the first electrode plate 111.

The first electrode current collecting plate 121 may include a central portion 121a defined by the central region thereof protruding in an outward direction and peripheral portions 121b extending from the central portion 121a in both directions. The outer surface of the central portion 121a may be welded to the inner surface of the first terminal current collecting plate 122.

The inner surfaces of the peripheral portions 121b may be welded to the first electrode tab of the electrode assembly 110. The central portion 121a may protrude in the outward direction toward the first cap plate 171 with respect to the peripheral portions 121b. The central portion 121a may be spaced apart from one side surface of the electrode assembly 110. The central portion 121a and the peripheral portions 121b may extend along lines that are parallel to each other.

The first electrode current collecting plate 121 may further include connection portions 121c formed obliquely between the central portion 121a and the peripheral portions 121b. Bent portions may be formed between the central portion 121 a and the connection portions 121c and between the connection portions 121c and the peripheral portions 121b.

Thus, the first electrode current collecting plate 121 may include the connection portions 121c and the peripheral portions 121b, which are formed on both sides of the central portion 121a in the first direction x. The planar size of the central portion 121a of the first electrode current collecting plate 121 may be similar to that of the first terminal current collecting plate 122.

The first terminal current collecting plate 122 may include a main body portion 122a extending in the first direction x and having a substantially plate shape and a protruding portion 122b formed at the center of the main body portion 122a in the first direction x. The first terminal current collecting plate 122 may electrically connect the first electrode current collecting plate 121 and the first terminal 130 to each other.

The inner surface of the main body portion 122a may be in contact with and welded to the central portion 121a of the first electrode current collecting plate 121. The protruding portion 122b may be formed at the center of the outer surface of the main body portion 122a and may protrude toward the first terminal 130. The protruding portion 122b may have a cylindrical shape, and one circular surface of the protruding portion 122b may be coupled to the main body portion 122a. The outer surface of the protruding portion 122b may be in contact with and welded to the first terminal 130. The outer surface 122ba of the protruding portion 122b may be a curved surface that is convex outward. The outer surface 122ba of the protruding portion 122b may be a surface facing the first terminal 130. The outer surface 122ba of the protruding portion 122b may be formed such that the central region thereof protrudes most toward the first terminal 130 and the peripheral region thereof is a curved surface that is rounded from the center to the edge. In some examples, the outer surface 122ba of the protruding portion 122b may be formed such that a portion of the peripheral region around the central region is a flat surface. However, it is preferable that a region to be welded to the first terminal 130 be a curved surface.

In some examples, the protruding portion 122b may further include a protrusion portion 122bb formed such that the central region thereof protrudes toward the first terminal 130 and penetrates the first terminal 130. The protrusion portion 122bb may be exposed to outside of the secondary battery 100 through a through-hole 132a formed in the first terminal 130. The contact state between the first terminal 130 and the protruding portion 122b of the first current collecting unit 120 may be checked using the exposed protrusion portion 122bb. Alignment between the first terminal 130 and the first current collecting unit 120 may be facilitated by the protrusion portion 122bb.

The first terminal 130 may be made of metal and may be in contact with and welded to the outer surface 122ba of the protruding portion 122b so as to be electrically connected thereto. The first terminal 130 may be made, for example, of aluminum or an aluminum alloy. The first terminal 130 may be located outside the first cap plate 171. The first terminal 130 may be formed as a substantially rectangular plate.

The first terminal 130 may include a first terminal plate 131 having a plate shape and a first welding area 132 that is thinner, e.g. formed to be thinner, than the first terminal plate 131 due to a terminal recess 132b that is formed to be concave inward at substantially the center of the first terminal plate 131.

In some examples, the terminal recess 132b may be formed in the inner surface of the welding area 132 (i.e. the outer or external surface which faces the protruding portion 122b). The first terminal 130 may have a step formed on the outer surface thereof (i.e. the outer or external surface that is distal to the protruding portion 122b) due to a terminal recess 131a. The terminal recess 131a may be located in a part of the first terminal plate 131. The terminal recess 131a may be located in the substantially central region of the first terminal 130 or a region corresponding to the protruding portion 122b of the first terminal current collecting plate 122.

The outer surface of the first welding area 132 may be a flat surface. The inner surface 132b thereof, which is in contact with and welded to the protruding portion 122b of the first current collecting unit 120, may have a shape corresponding to the shape of the outer surface 122ba of the protruding portion 122b. The inner surface 132b of the first welding area 132 may be formed in the shape of a concavely curved surface. The inner surface 132b of the first welding area 132 may be welded to the outer surface of the protruding portion 122b of the first current collecting unit 120 while the inner surface 132b and the protruding portion 122b are in contact therewith. Welding between the first welding area 132 and the protruding portion 122b may be performed on the outer surface 122ba of the first welding area 132. Because the inner surface 132b of the first welding area 132 and the outer surface 122ba of the protruding portion 122b are formed as curved surfaces, when welding is performed on a given area on the outer surface of the first welding area 132, the size of the regions welded to each other may increase compared to when the inner surface 132b of the first welding area 132 and the outer surface 122ba of the protruding portion 122b are formed in the shape of a flat surface. Further, because the inner surface 132b of the first welding area 132 and the outer surface 122ba of the protruding portion 122b are formed in the shape of a curved surface, an area of a welding bead W may increase during welding, whereby coupling force may be improved.

The welding bead W between the first welding area 132 and the protruding portion 122b may be spaced from the through-hole 132a in the first terminal 130 and may be formed in a circular ring shape when viewed in plan. Although two welding beads W are illustrated in FIG. 4, one welding bead W or three or more welding beads W may be formed. In other words, the present disclosure is not limited as to the number of welding beads W. The first terminal 130 and the first current collecting unit 120 may be mechanically and electrically coupled to each other by the welding beads W. Further, sealing between the first terminal 130 and the first current collecting unit 120 may be achieved by the welding beads W.

The first welding area 132 may further include a through-hole 132a formed at the center thereof so as to pass through the first welding area 132. The inner diameter of the through-hole 132a may be larger than the outer diameter of the protrusion portion 122bb of the protruding portion 122b of the first current collecting unit 120. In other examples, the inner diameter of the through-hole 132a may be equal to the outer diameter of the protrusion portion 122bb such that the protrusion portion 122bb may be coupled in the through-hole 132a in the first welding area 132 in an interference fit manner. The protrusion portion 122bb of the first current collecting unit 120 may pass through the through-hole 123a to be exposed to outside of the secondary battery.

In some examples, a first insulating member 172 may be further interposed between the first terminal 130 and the first cap plate 171. The first insulating member 172 may also be interposed between the first terminal 130 and the first current collecting unit 120. In particular, the first insulating member 172 may be interposed between the inner surface of the first terminal 130 and the first terminal current collecting plate 122. The first insulating member 172 may be made of a resin material that does not react with an electrolyte, such as polyethylene (PE), polypropylene (PP), or polyethylene terephthalate (PET). The first insulating member 172 may be elastically interposed between the first terminal 130 and the first cap plate 171 to increase sealing force between the first terminal 130 and the first cap plate 171 and to electrically isolate the first terminal 130 and the first cap plate 171 from each other.

The first insulating member 172 may include an insulating hole 172a formed therein so as to expose the inner surface 132b of the first welding area 132 of the first terminal 130 to the first current collecting unit 120. The inner diameter of the insulating hole 172a may be larger than the outer diameter of the protruding portion 122b of the first current collecting unit 120. In other examples, the inner diameter of the insulating hole 172a may be equal to the outer diameter of the protruding portion 122b of the first current collecting unit 120. The protruding portion 122b of the first current collecting unit 120 may be inserted into the insulating hole 172a in the first insulating member 172 or may be coupled therein in an interference fit manner, and the protruding portion 122b may be in contact with and welded to the inner surface 132b of the first welding area 132. In this way, the protruding portion 122b of the first current collecting unit 120 may pass through the first insulating member 172 and may be welded to the first welding area 132 of the first terminal 130.

The second current collecting unit 140 may be made of metal and may electrically connect the second electrode plate 112 and the second terminal 150 to each other. The second current collecting unit 140 may be formed as a metal plate and may include a second electrode current collecting plate 141, which is in contact with and coupled to the second electrode tab of the second electrode plate 112. The second current collecting unit may also include a second terminal current collecting plate 142, which is in contact with and coupled to the second terminal 150. In some examples, the second current collecting unit 140 may be formed to be symmetrical to the first current collecting unit 120 with respect to the electrode assembly 110 and may be coupled to the electrode assembly 110 and the second terminal 150. The second current collecting unit 140 may be made, for example, of copper or a copper alloy.

The second terminal 150 may be made of metal and may be electrically connected to the second current collecting unit 140. In some examples, the second terminal 150 may be located outside a second cap plate 181. A second insulating member 182 may be interposed between the second terminal 150 and the second cap plate 181.

The second terminal 150 may include a second terminal plate 151 and a second welding area 152, which are made of different metals. In detail, the second terminal plate 151 may be made of aluminum or an aluminum alloy, and the second welding area 152 may be made of copper or a copper alloy. In some examples, the second welding area 152 may have a flat plate shape extending along the inner surface of the second terminal plate 151. A clad sheet (not shown) may be further provided between the inner surface of the first terminal plate 151 and the outer surface of the second welding area 152. The clad sheet may couple and electrically connect the second terminal plate 151 and the second welding area 152, which are made of different metals, to each other. The clad sheet may be a sheet in which an aluminum sheet and a copper sheet are bonded to each other through thermal compression. For example, the clad sheet may be an aluminum sheet having a thickness of 2 mm and a copper sheet having a thickness of 0.5 mm to 0.7 mm that are bonded to each other through thermal compression. The aluminum sheet of the clad sheet may be welded to the second terminal plate 151, and the copper sheet of the clad sheet may be welded to the second welding area 152.

The shape and structure of the second terminal 150 may be similar or identical to those of the first terminal 130. However, the second terminal 150 may be formed to be symmetrical to the first terminal 130 with respect to the electrode assembly 110 and may be coupled to the electrode assembly 110 via the second current collecting unit 140. In some examples, the shape and structure of the second cap plate 181 and the second insulating member 182 may be identical to those of the first cap plate 171 and the first insulating member 172.

The case 160 may have a substantially hollow rectangular parallelepiped shape and include openings 161 and 162 formed in both sides thereof. The electrode assembly 110 coupled to the first current collecting unit 120 and to the second current collecting unit 140 may be inserted into the case 160 through the openings 161 and 162.

The case 160 may include rectangular upper and lower short side surfaces extending in a second direction y, which is the longitudinal direction of the case, and two rectangular long side surfaces interconnecting the upper short side surface and the lower short side surface and extending in the second direction y. The upper and lower short side surfaces and the two long side surfaces of the case 160 may be integrally formed with each other.

The case 160 may include a vent hole formed through the short side surface or the long side surface thereof. A safety vent 163 may be mounted in the vent hole in the case 160. The safety vent 163 may include a notch formed to be thinner than the other areas so as to be opened at a set pressure.

The first cap assembly 170 may be coupled to the left opening 161 in the case 160. In some examples, the first cap assembly 170 may include the first cap plate 171 and the first insulating member 172.

The first cap plate 171 may have a rectangular flat plate shape and may seal the left opening 161 in the case 160. The first cap plate 171 may include a terminal hole and an electrolyte injection hole formed therein so as to pass through the first cap plate 171. The protruding portion 122b of the first current collecting unit 120 may pass through the terminal hole in the first cap plate 171 to be coupled to the first terminal 130. The electrolyte injection hole may be sealed by a cap 173 after the first cap plate 171 is coupled to the case 160 and the electrolyte is injected into the case 160.

The first insulating member 172 may be interposed between the inner surface of the first cap plate 171 and the first terminal 130 and between the first terminal 130 and the first current collecting unit 120.

In the secondary battery 100, the first cap assembly 170 coupled to the first terminal 130 may be coupled to one opening in the case 160, and the second cap assembly 180 coupled to the second terminal 150 may be coupled to the other opening in the case 160, whereby the first terminal 130 and the second terminal 150 may be located on both sides of the case 160. Because the first terminal 130 and the second terminal 150 are provided on both sides of the secondary battery 100, if a plurality of secondary batteries 100 is combined in a module form, cooling members (not shown) may be coupled to upper and lower regions of the case 160, thereby reducing deterioration of the secondary battery 100 and improving cooling performance.

In one example, in a battery module in which the long side surfaces of the plurality of secondary batteries 100 are disposed so as to face each other, the first terminal and/or the second terminal exposed from the sides of each secondary battery may be electrically connected to the first terminals and/or the second terminals of the other secondary batteries, respectively.

Further, because the first terminal 130 and the second terminal 150 are respectively provided on both sides of the secondary battery 100, if a plurality of secondary batteries 100 is combined in a module form, charge/discharge current may flow along the terminals provided on the same sides. Thus, deterioration may be reduced compared to a structure in which two terminals are provided together on one side of a secondary battery and charge/discharge current flows along the two terminals on one side. Further, if a plurality of secondary batteries 100 is combined in a module form, the terminals provided on the same side among both sides may be connected to each other, and thus efficiency of use of space may increase.

As is apparent from the above description, according to the present disclosure there may be provided a secondary battery in which regions to be welded of a terminal and a current collecting unit are formed as a curved surface, thereby increasing the size of welded regions in a given welding area. Thus, coupling force may be improved compared to a structure in which regions to be welded are formed as a flat surface.

Embodiments are set out in the following clauses.

Clause 1. A secondary battery comprising: an electrode assembly comprising an electrode tab; a current collecting unit electrically coupled to the electrode tab; a case accommodating the electrode assembly and the current collecting unit; a cap plate sealing the case; and a terminal mechanically and electrically coupled to the current collecting unit and located outside the cap plate, wherein the current collecting unit comprises: an electrode current collecting plate welded to the electrode tab; and a terminal current collecting plate protruding from the electrode current collecting plate toward the terminal and comprising a protruding portion welded to the terminal, and wherein the protruding portion comprises an outer surface in contact with and welded to the terminal and comprising a curved surface.

Clause 2. The secondary battery of Clause 1, wherein the curved surface of the outer surface of the protruding portion is convex in an outward direction.

Clause 3. The secondary battery of Clause 2, wherein the terminal comprises an inner surface in contact with and welded to the outer surface of the protruding portion and comprising a curved surface formed in a shape corresponding to the outer surface of the protruding portion.

Clause 4. The secondary battery of Clause 1, wherein the electrode current collecting plate comprises: a central portion comprising an outer surface welded to an inner side of the terminal current collecting plate; and peripheral portions extending from the central portion in both directions and welded to the electrode tab of the electrode assembly.

Clause 5. The secondary battery of Clause 4, wherein the central portion of the electrode current collecting plate protrudes in an outward direction with respect to the peripheral portions.

Clause 6. The secondary battery of Clause 5, wherein the electrode current collecting plate further comprises connection portions formed between the central portion and the peripheral portions so as to be slanted from the central portion toward the peripheral portions.

Clause 7. The secondary battery of Clause 1, wherein the terminal current collecting plate further comprises a main body portion formed in a plate shape and comprising an inner surface in contact with and welded to the electrode current collecting plate, and wherein the protruding portion protrudes from an outer surface of the main body portion in an outward direction.

Clause 8. The secondary battery of Clause 7, wherein the protruding portion is formed in a cylindrical shape comprising a circular surface coupled to the main body portion.

Clause 9. The secondary battery of Clause 7, wherein the protruding portion further comprises a protrusion portion formed on a central region of the outer surface of the protruding portion so as to pass through the terminal to be exposed to an outside.

Clause 10. The secondary battery of Clause 9, wherein the terminal comprises: a flat terminal plate; and a welding area comprising a terminal recess formed to be concave in an inward direction at a center of an outer surface of the terminal plate, the welding area being formed to be thinner than the terminal plate.

Clause 11. The secondary battery of Clause 10, wherein the terminal recess is located at a region corresponding to the protruding portion of the terminal current collecting plate.

Clause 12. The secondary battery of Clause 10, wherein the terminal further comprises a through-hole formed in the welding area so as to correspond to the protrusion portion and to pass through an inner surface and an outer surface of the welding area.

Clause 13. The secondary battery of Clause 12, wherein the through-hole in the terminal has an inner diameter greater than or equal to an outer diameter of the protrusion portion of the terminal plate.

Clause 14. The secondary battery of Clause 12, wherein the terminal and the terminal current collecting plate comprise a welding bead formed therebetween, and wherein the welding bead is spaced apart from the through-hole in the terminal and is formed in a circular ring shape when viewed in plan.

Clause 15. The secondary battery of Clause 10, further comprising an insulating member interposed between the terminal and the cap plate.

Clause 16. The secondary battery of Clause 15, wherein the insulating member is interposed between the terminal and the current collecting unit.

Clause 17. The secondary battery of Clause 15, wherein the insulating member comprises an insulating hole formed therein so as to expose an inner surface of the welding area of the terminal to the current collecting unit.

Clause 18. The secondary battery of Clause 17, wherein the protruding portion of the current collecting unit is inserted into the insulating hole to be in contact with and welded to the inner surface of the welding area.

Clause 19. The secondary battery of Clause 17, wherein the insulating hole has an inner diameter greater than or equal to an outer diameter of the protruding portion of the current collecting unit.

Clause 20. The secondary battery of Clause 1, wherein the current collecting unit and the terminal are welded to each other to achieve sealing therebetween.

The above descriptions are only some of the embodiments for implementing a secondary battery according to the disclosure, and the disclosure is not limited to the embodiments. It will be understood by those skilled in the art that various modifications can be made without departing from the scope of the disclosure.

## Claims

1. A secondary battery comprising:
an electrode assembly comprising an electrode tab;
a current collecting unit electrically coupled to the electrode tab;
a case accommodating the electrode assembly and the current collecting unit;
a cap plate sealing the case; and
a terminal mechanically and electrically coupled to the current collecting unit, the terminal being located outside the cap plate,
wherein the current collecting unit comprises:
an electrode current collecting plate welded to the electrode tab; and
a terminal current collecting plate protruding from the electrode current collecting plate toward the terminal and comprising a protruding portion welded to the terminal, and
wherein the protruding portion comprises an outer surface in contact with and welded to the terminal, the outer surface comprising a curved surface.

2. The secondary battery as claimed in claim 1, wherein the curved surface of the outer surface of the protruding portion is convex.

3. The secondary battery as claimed in claim 1 or 2, wherein the terminal comprises an inner surface in contact with and welded to the outer surface of the protruding portion, the inner surface comprising a curved surface formed in a shape corresponding to a shape of the outer surface of the protruding portion.

4. The secondary battery as claimed in claim 1, 2 or 3, wherein the electrode current collecting plate comprises:
a central portion comprising an outer surface welded to an inner side of the terminal current collecting plate; and
peripheral portions extending in opposite directions from the central portion and welded to the electrode tab of the electrode assembly.

5. The secondary battery as claimed in claim 4, wherein the central portion of the electrode current collecting plate protrudes in an outward direction with respect to the peripheral portions.

6. The secondary battery as claimed in claim 4 or 5, wherein the electrode current collecting plate further comprises connection portions formed between the central portion and the peripheral portions so as to be slanted from the central portion toward the peripheral portions.

7. The secondary battery as claimed in any preceding claim, wherein the terminal current collecting plate further comprises a main body portion formed in a plate shape and comprising an inner surface in contact with and welded to the electrode current collecting plate,
wherein the protruding portion protrudes from an outer surface of the main body portion,
and wherein optionally the protruding portion is formed in a cylindrical shape.

8. The secondary battery as claimed in any preceding claim, wherein the protruding portion further comprises a protrusion portion formed on a central region of the outer surface of the protruding portion and configured to pass through the terminal so as to be exposed to an outside of the secondary battery.

9. The secondary battery as claimed in any preceding claim, wherein the terminal comprises:
a flat terminal plate; and
a welding area,
wherein the welding area is thinner than the flat terminal plate,
and wherein the welding area comprises a concave terminal recess formed at a center of an inner surface of the terminal plate,
and wherein optionally the concave terminal recess is located at a position corresponding to the protruding portion of the terminal current collecting plate.

10. The secondary battery as claimed in claim 10, wherein a through-hole is formed in the welding area, the through-hole positioned so as to correspond to the position of the protrusion portion.

11. The secondary battery as claimed in claim 10, wherein at least one of:
the through-hole has an inner diameter greater than or equal to an outer diameter of the protrusion portion; and
a welding bead is formed between the terminal and the terminal current collecting plate, wherein the welding bead is spaced from the through-hole and is formed in a circular ring shape.

12. The secondary battery as claimed in any preceding claim, further comprising an insulating member interposed between the terminal and the cap plate,
wherein optionally the insulating member is interposed between the terminal and the current collecting unit.

13. The secondary battery as claimed in claim 12, when dependent on claim 9, wherein the insulating member comprises an insulating hole formed therein so as to expose an inner surface of the welding area of the terminal to the current collecting unit.

14. The secondary battery as claimed in claim 13, wherein at least one of:
the protruding portion of the current collecting unit extends into the insulating hole and is in contact with and welded to the inner surface of the welding area; and
the insulating hole has an inner diameter greater than or equal to an outer diameter of the protruding portion of the current collecting unit.

15. The secondary battery as claimed in any preceding claim, wherein the current collecting unit and the terminal are welded to each other so as to provide sealing therebetween.

## Amended claims

### Amended claims in accordance with Rule 137(2) EPC.

1. A secondary battery (100) comprising:
an electrode assembly (110) comprising an electrode tab;
a current collecting unit (120, 140) electrically coupled to the electrode tab;
a case (160) accommodating the electrode assembly (110) and the current collecting unit (120, 140);
a cap plate (171, 181) sealing the case (160); and
a terminal (130, 150) mechanically and electrically coupled to the current collecting unit (120, 140), the terminal (130, 150) being located outside the cap plate (171, 181),
wherein the current collecting unit (120,140) comprises:
an electrode current collecting plate (121,141) welded to the electrode tab; and
a terminal current collecting plate (122,142) protruding from the electrode current collecting plate (121, 141) toward the terminal (130, 150) and comprising a protruding portion (122b) welded to the terminal (130, 150),
wherein the protruding portion (122b) comprises an outer surface (122ba) in contact with and welded to the terminal (130, 150), the outer surface (122ba) comprising a curved surface, and
wherein the terminal current collecting plate (122, 142) further comprises a main body portion (122a) formed in a plate shape and extending along the first direction (x),
wherein the protruding portion (122b) is located at the center of the main body portion (122a) in the first direction (x).

2. The secondary battery (100) as claimed in claim 1, wherein the curved surface of the outer surface (122ba) of the protruding portion (122b) is convex.

3. The secondary battery (100) as claimed in claim 1 or 2, wherein the terminal (130, 150) comprises an inner surface in contact with and welded to the outer surface (122ba) of the protruding portion (122b), the inner surface comprising a curved surface formed in a shape corresponding to a shape of the outer surface (122ba) of the protruding portion (122b).

4. The secondary battery (100) as claimed in claim 1, 2 or 3, wherein the electrode current collecting plate (121, 141) comprises:
a central portion (121a) comprising an outer surface welded to an inner side of the terminal current collecting plate (122, 142); and
peripheral portions (121b) extending in opposite directions from the central portion (121a) and welded to the electrode tab of the electrode assembly (110).

5. The secondary battery (100) as claimed in claim 4, wherein the central portion (121a) of the electrode current collecting plate (121, 141) protrudes in an outward direction with respect to the peripheral portions (121b).

6. The secondary battery (100) as claimed in claim 4 or 5, wherein the electrode current collecting plate (121, 141) further comprises connection portions (121c) formed between the central portion (121a) and the peripheral portions (121b) so as to be slanted from the central portion (121a) toward the peripheral portions (121b).

7. The secondary battery (100) as claimed in any preceding claim, wherein the main body portion (122a) comprises an inner surface in contact with and welded to the electrode current collecting plate (121, 141),
wherein the protruding portion (122b) protrudes from an outer surface of the main body portion (122a),
and wherein optionally the protruding portion (122b) is formed in a cylindrical shape.

8. The secondary battery (100) as claimed in any preceding claim, wherein the protruding portion (122b) further comprises a protrusion portion (122bb) formed on a central region of the outer surface (122ba) of the protruding portion (122b) and configured to pass through the terminal (130, 160) so as to be exposed to an outside of the secondary battery (100).

9. The secondary battery (100) as claimed in any preceding claim, wherein the terminal (130, 150) comprises:
a flat terminal plate (131, 151); and
a welding area (132, 152),
wherein the welding area (132, 152) is thinner than the flat terminal plate (131, 151),
and wherein the welding area (132, 152) comprises a concave terminal recess (132b) formed at a center of an inner surface of the terminal plate (131, 151),
and wherein optionally the concave terminal recess (132b) is located at a position corresponding to the protruding portion (122b) of the terminal current collecting plate (122, 142).

10. The secondary battery (100) as claimed in claim 9, when dependent on claim 8, wherein a through-hole (132a) is formed in the welding area (132, 152), the through-hole (132a) positioned so as to correspond to the position of the protrusion portion (122bb).

11. The secondary battery (100) as claimed in claim 10, wherein at least one of:
the through-hole (132a) has an inner diameter greater than or equal to an outer diameter of the protrusion portion (122bb); and
a welding bead (W) is formed between the terminal (130, 150) and the terminal current collecting plate (122, 142), wherein the welding bead (W) is spaced from the through-hole (132a) and is formed in a circular ring shape.

12. The secondary battery (100) as claimed in any preceding claim, further comprising an insulating member (172, 182) interposed between the terminal (130, 150) and the cap plate (171, 181),
wherein optionally the insulating member (172, 182) is interposed between the terminal (130, 150) and the current collecting unit (120, 140).

13. The secondary battery (100) as claimed in claim 12, when dependent on claim 9, wherein the insulating member (172, 182) comprises an insulating hole (172a) formed therein so as to expose an inner surface (132b) of the welding area (132, 152) of the terminal (130, 150) to the current collecting unit (120, 140).

14. The secondary battery (100) as claimed in claim 13, wherein at least one of:
the protruding portion (122b) of the current collecting unit (120, 140) extends into the insulating hole (172a) and is in contact with and welded to the inner surface (132b) of the welding area (132, 152); and
the insulating hole (172a) has an inner diameter greater than or equal to an outer diameter of the protruding portion (122b) of the current collecting unit (120, 140).

15. The secondary battery (100) as claimed in any preceding claim, wherein the current collecting unit (120, 140) and the terminal (130, 150) are welded to each other so as to provide sealing therebetween.
